# FASCICULE DE BREVET EUROPEEN

(11) **EP 0 820 620 B1**
(45) Date de publication et mention de la délivrance du brevet: **17.03.1999**
(21) Numéro de dépôt: 96911022.0
(22) Date de dépôt: 03.04.1996
(51) Int. Cl.: G07F 7/10

(54) **PROCEDE DE PAIEMENT ELECTRONIQUE PERMETTANT D'EFFECTUER DES TRANSACTIONS LIEES A L'ACHAT DE BIENS SUR UN RESEAU INFORMATIQUE**
VERFAHREN ZUM ELEKTRONISCHEN BEZAHLEN BEI DER DURCHFÜHRUNG VON KAUF-TRANSAKTIONEN IN EINEM RECHNERNETZWERK
ELECTRONIC PAYMENT METHOD FOR PURCHASE-RELATED TRANSACTIONS OVER A COMPUTER NETWORK

(30) Priorité: 14.04.1995 FR 9504533
(43) Date de publication de la demande: 28.01.1998
(73) Titulaire: G C Tech, 75001 Paris (FR)
(72) Inventeur: PAYS, Paul-André, F-75015 Paris (FR); BEN DAHAN, Gérard, F-75010 Paris (FR)
(74) Mandataire: Joly, Jean-Jacques
(86) Numéro de dépôt international: FR9600500
(87) Numéro de publication internationale: WO9632701

(56) Documents cités:
- EP-A- 0 359 667
- EP-A- 0 501 697
- EP-A- 0 590 861
- GB-A- 2 258 749
- US-A- 3 852 571
- US-A- 5 283 829

## Description

La présente invention concerne un procédé de paiement électronique permettant d'effectuer des transactions liées à l'achat de biens offerts par des marchands au moyen de services télématiques via un réseau de télécommunication informatique ouvert sur lequel sont connectés des postes serveurs de marchands et des postes clients.

Par réseau informatique ouvert, on entend ici un réseau sur lequel des particuliers ou des entreprises peuvent librement se connecter à la condition de disposer d'une adresse, par exemple le réseau "Internet". Les biens concernés sont des produits ou des services, dont la fourniture est réalisée hors du réseau après la conclusion de la transaction, ou des biens immatériels, tels que des informations, dont la fourniture peut être réalisée via le réseau informatique.

Divers procédés de paiement électronique (p. ex. EP-A-0 501 697) ont été proposés, certains étant déjà opérationnels.

Plusieurs procédés sont fondés sur une nouvelle représentation de la monnaie. Il s'agit d'une représentation électronique, quelquefois dénommée "jeton" qui peut être purement logicielle ou partiellement matérielle, par exemple avec une carte à puce. Ces procédés impliquent la circulation de monnaie sur le réseau informatique, ce qui pose des problèmes difficiles de sécurité vis-à-vis de la création de fausse monnaie.

D'autres procédés connus de paiement électronique impliquent une relation directe avec une banque ou un réseau bancaire. Typiquement, de tels procédés sont employés dans les réseaux de carte de crédit comme, par exemple, des procédés bien connus utilisant des terminaux points de vente reliés à un circuit carte bancaire ainsi que des procédés utilisant des chèques électroniques avec une signature électronique pour l'authentification de l'acheteur. Cest une forme de lettre d'engagement émise par un acheteur, remise au vendeur et acceptée et reconnue par une banque.

Les procédés qui impliquent à un moment ou un autre de la transaction une relation avec le système bancaire traditionnel et la mise en oeuvre d'une transaction dans ce système présentent des inconvénients. Ainsi, les transactions dans le système bancaire ont un coût réel qui devient prohibitif lorsque le montant de l'achat est très faible, par exemple un montant associé à la consultation d'une base de données. Or, les réseaux informatiques sont bien adaptés à la vente de biens de faible valeur, principalement des biens d'information, puisque la livraison du bien peut se faire par le réseau lui-même. En outre, l'accès à un réseau bancaire ou un réseau de carte bancaire doit être hautement protégé, ce qui exclut pratiquement la possibilité d'un accès à travers un réseau informatique ouvert, tel que le réseau "Intemet" sur lequel des acheteurs potentiels peuvent se connecter.

L'invention a pour but de fournir un procédé permettant d'éviter les inconvénients des procédés connus, en particulier un procédé permettant, sans circulation de monnaie électronique, de réaliser de façon simple et fiable des transactions liées à l'achat de biens sur un réseau informatique, et ce aussi bien pour des biens de prix élevé nécessitant une autorisation par le système bancaire traditionnel, que pour des biens de faible ou très faible prix.

Ce but est atteint grâce à un procédé du type défini en tête de la présente description et comportant, conformément à l'invention, les étapes de :
- élaboration par un poste serveur de marchand connecté au réseau d'une demande d'autorisation de transaction, ou "ticket de paiement", concernant un achat envisagé entre le marchand et un client, et comportant des informations relatives au marchand, au client, à l'objet de l'achat et à son prix,
- transmission du ticket de paiement via le réseau informatique à un poste serveur de paiement distinct des postes clients et serveurs de marchands,
- vérification automatique par le serveur de paiement si le paiement du prix est autorisé pour le client concerné, la vérification étant effectuée, selon le montant du prix à payer, soit par interrogation d'un compte propre au client, tenu par le serveur de paiement, et destiné au paiement des petits montants, soit par interrogation sur un réseau bancaire indépendant du réseau informatique, pour les paiements de montants plus élevés,
- si la vérification est positive, élaboration par le serveur de paiement d'une autorisation de transaction ou bon de caisse comportant au moins une partie des informations du ticket de paiement,
- transmission du bon de caisse au serveur de marchand via le réseau informatique, afin d'autoriser la réalisation de l'achat, et
- lorsqu'un bon de caisse est transmis après vérification par interrogation d'un compte client tenu par le serveur de paiement, débit du montant de l'achat du compte client et crédit du montant de l'achat sur un compte marchand propre au marchand concerné et tenu par le serveur de paiement.

Ainsi, le procédé selon l'invention est remarquable en ce qu'il n'implique ni la création de monnaie électronique, ni la circulation de monnaie électronique sur le réseau informatique.

La gestion des transactions est effectuée par un serveur de paiement qui seul peut accéder à un réseau bancaire ou un réseau de carte bancaire, et qui gère des comptes clients non bancaires sur lesquels des transactions de faibles montants peuvent être effectuées.

Du fait que le serveur de paiement gère également des comptes marchands non bancaires utilisés pour les transactions de faibles montants, les coûts de traitement ne sont pas élevés pour ce type de transactions.

Chaque client dispose d'une identité qui lui est propre pour pouvoir utiliser le procédé de paiement. Il doit également disposer d'un compte bancaire réel, de préférence un compte utilisable au moyen du système traditionnel des cartes bancaires. La vérification par le serveur de paiement peut comprendre une phase préalable de validation de l'identité du client à partir du contenu du ticket de paiement. La validation de l'identité est une opération préalable à l'accès éventuel au compte du clicnt, si le montant de l'achat est faible, et/ou à l'accès au réseau bancaire si le montant est plus élevé. Le serveur de paiement comporte de préférence des moyens, par exemple une base de données, permettant de mémoriser les relations entre les identités des clients utilisées pour les transactions sur le réseau informatique et des identités bancaires (numéros de comptes bancaires ou numéros de cartes de crédit) utilisées pour les transactions sur le réseau bancaire. On peut éviter de la sorte la circulation d'identités bancaires sur le réseau informatique.

Un mode de réalisation de l'invention sera maintenant décrit à titre indicatif, mais non limitatif, en référence aux dessins annexés sur lesquels :
- la figure 1 est une vue générale très schématique d'un système de paiement électronique conforme à l'invention ;
- la figure 2 est une représentation sous forme d'un schéma bloc d'un serveur de paiement du système de la figure 1 ;
- la figure 3 illustre le déroulement des opérations relatives à un achat au moyen du système de la figure 1 ; et
- les figures 4A à 4C sont des organigrammes montrant très schématiquement les opérations effectuées par le serveur de paiement.

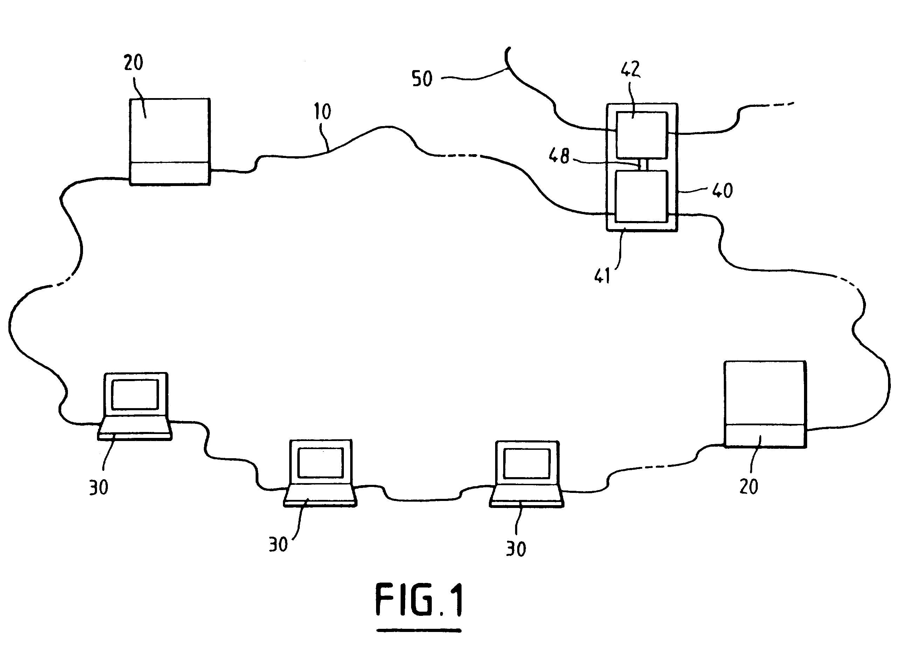

Sur la figure 1 est représenté de façon très schématique un réseau de télécommunication informatique 10 sur lequel sont connectés des postes serveurs de marchands 20, des postes clients 30 et au moins un poste serveur de paiement 40.

Le réseau informatique 10 est un réseau ouvert ou public, par exemple le réseau dénommé "Internet".

Les serveurs de marchands 20 sont des unités telles que celles couramment utilisées pour des serveurs télématiques connectés sur "Internet", par exemple des unités organisées autour de machines "Unix" multiprocesseurs.

Les postes clients 30 sont essentiellement des micro-ordinateurs qui sont munis de moyens de connexion au réseau "Internet" 10, par exemple sous forme d'interface "Web". Les serveurs de marchands 20 et de postes clients 30 utilisent par exemple des logiciels connus sous la dénomination "World Wide Web" (WWW) utilisant le protocole HTTP.

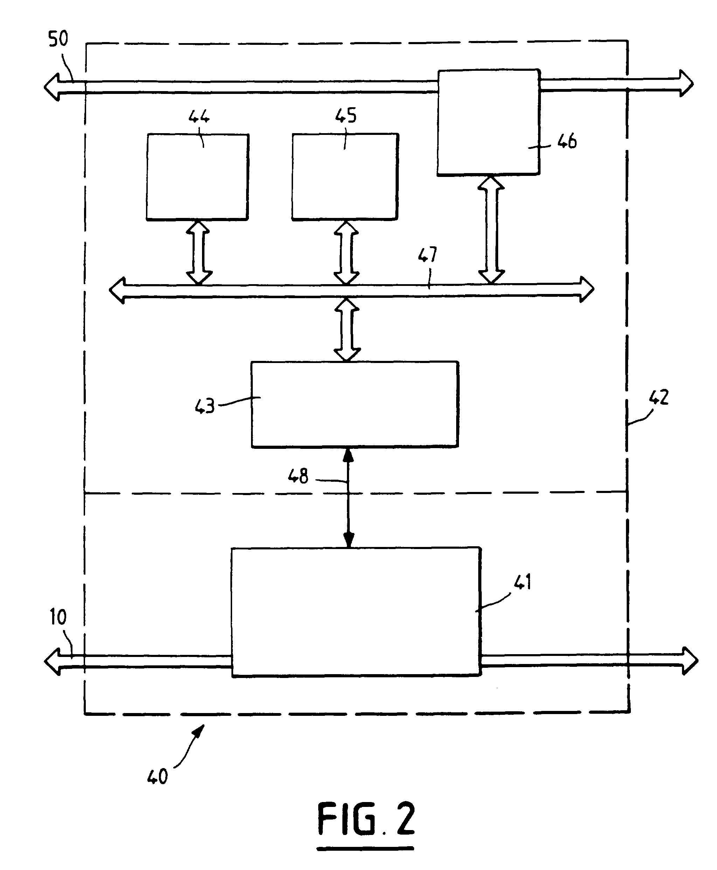

Le serveur de paiement 40, montré avec plus de détails sur la figure 2, comprend des unités frontale et dorsale respectivement 41 et 42 connectées toutes les deux au réseau "Internet" 10. L'unité frontale 41 a une architecture semblable à celle d'un serveur classique connecté sur un réseau tel qu"'Internet"". L'unité dorsale 42 comporte une unité de traitement 43 à un ou plusieurs processeurs, une base de données 44 comportant des informations relatives aux marchands et clients abonnés au système de paiement, un registre de transactions 45, une unité 46 d'interface avec un réseau bancaire ou un réseau de carte bancaire 50, et un bus de communication 47 ou autre liaison similaire permettant de relier entre eux les différents constituants de l'unité dorsale 42. Une liaison sécurisée 48 permet une communication bidirectionnelle entre l'unité frontale 41 et l'unité de traitement 43. La communication avec le réseau informatique 10 est contrôlée par l'unité frontale 41 tandis que la gestion de la base de données 44 ainsi que le contrôle de la communication avec le réseau bancaire 50 sont assurés par l'unité dorsale 42.

La base de données 44 contient des informations relatives aux clients et aux marchands abonnés au système de paiement. Pour chaque client, la base de données 44 contient l'identité système du client ("**CId**"), identité reçue lors de l'abonnement au système, un compte de client ou porte monnaie électronique ("**PME**") destiné au paiement de faibles montants, une identité bancaire telle que numéro de compte bancaire réel ou numéro de carte de crédit ainsi qu'éventuellement une clef d'accès ou mot de passe propre au client. Pour chaque marchand, la base de données 44 contient l'identité système du marchand ("**MId**"), identité reçue lors de l'abonnement au système, un compte de marchand, ou tiroir-caisse électronique ("**TCE**") destiné à l'encaissement des faibles montants et une identité bancaire telle que numéro de compte bancaire réel.

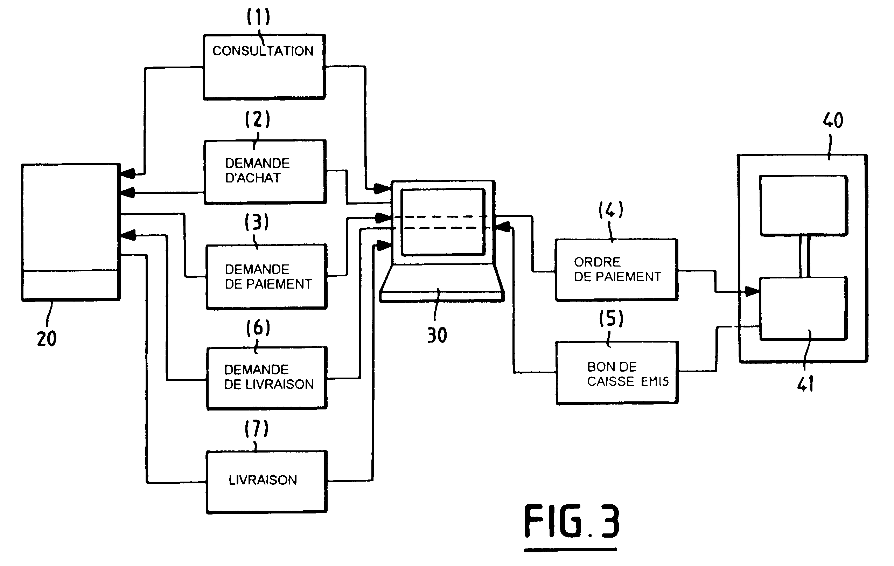

La figure 3 illustre schématiquement les différentes étapes d'une transaction portant sur un achat d'un bien par un client abonné à un marchand abonné. Il peut s'agir d'un bien matériel dont la livraison au client sera effectuée réellement après conclusion de la transaction ou d'un bien immatériel (tel que de l'information) qui peut être fournie au client par le réseau informatique dès le paiement électronique effectué.

### (1) Consultation par le client

Par connexion sur le réseau "Internet" 10, un client peut consulter en ligne le catalogue ou la "vitrine" d'un marchand quelconque par accès au serveur 20 du marchand et par visualisation sur l'écran du poste client 30 des biens ou services du marchand. Sur présentation de l'identité CId du client, le serveur du marchand peut présenter au client des conditions financières particulières (par exemple une remise) applicables à la transaction éventuelle.

### (2) Demande d'achat

Le choix du client étant arrêté sur un bien O, il est transmis au serveur du marchand sous forme d'un message contenant une identité OId du bien et l'identité CId du client. Lorsque cela est nécessaire, par exemple pour la livraison ultérieure du bien choisi, des informations complémentaires (par exemple une adresse et un horaire de livraison préféré). Cela peut être réalisé de façon commode en utilisant un formulaire électronique envoyé sur le réseau et destiné à être rempli par le client.

Dans le cas où l'achat envisagé représente un montant élevé ou est soumis à des conditions légales, une authentification préalable du client peut être souhaitée. Comme on le verra en détail plus loin l'authentification d'un client est effectuée par le serveur de paiement 40. Aussi, une demande d'authentification provenant d'un marchand est émise avantageusement sous la forme d'un ticket de paiement de valeur nulle qui est transmis au serveur de paiement par le réseau informatique via le poste client et, en cas d'authentification positive, provoque le retour d'un bon de caisse du serveur de paiement au serveur marchand, toujours via le poste client. Les procédures d'établissement d'un ticket de paiement et de renvoi d'un bon de caisse sont décrites plus en détail ci-après.

La demande d'achat émise par le client peut porter sur un seul bien ou sur plusieurs biens à fournir de façon groupée : "achat panier".

### (3) Elaboration de la demande de paiement

En réponse à une demande d'achat, le serveur marchand élabore une demande de paiement qui peut comprendre les informations suivantes :
- Identité du marchand, ("**MId**");
- Description du bien commandé, ou de chacun des biens du panier, en cas d'achats groupés;
- Type de transaction (simple ou panier);
- Identité du client, ("**CId**");
- Identité du bien ou de l'ensemble des biens du panier, ("**OId**");
- Prix de l'objet, ("**Oid**");
- TVA (si applicable);
- Date et heure de l'émission du ticket de paiement (horodatage par le serveur marchand);
- Durée de validité du ticket de paiement;
- Numéro de série dans le registre des ventes du marchand (notamment dans le cas où la transaction a comporté une étape préalable d'authentification).

L'ensemble des informations ci-dessus est encodée dans une chaîne d'octets qui constitue la chaîne opaque d'un ticket de paiement (ou URL de commande de bien, URL étant les initiales de "Uniform Resource Locator" ou Localisateur de Ressource Uniforme utilisé dans les logiciels WWW avec protocole HTTP), comme suit:
URL http : <SP> <descriptif de la commande> ,
où SP est l'adresse "Internet" du serveur de paiement. Le ticket de paiement est adressé au poste client. Il est complété par deux "ancres" logiques qui permettent au client soit de l'annuler, soit de le confirmer.

### (4) Envoi de l'ordre de paiement

L'ordre de paiement est transmis au serveur de paiement simplement par validation par le client de l'URL de demande de paiement. On comprendra bien que le ticket de paiement ne fait alors que transiter par le poste client.

### (5) Emission du bon de Caisse

Sur réception d'un ordre de paiement, le serveur de paiement 40 le décode et procède à l'authentification du client et recherche si le paiement peut être autorisé avant de retourner un bon de caisse ou un refus de paiement.

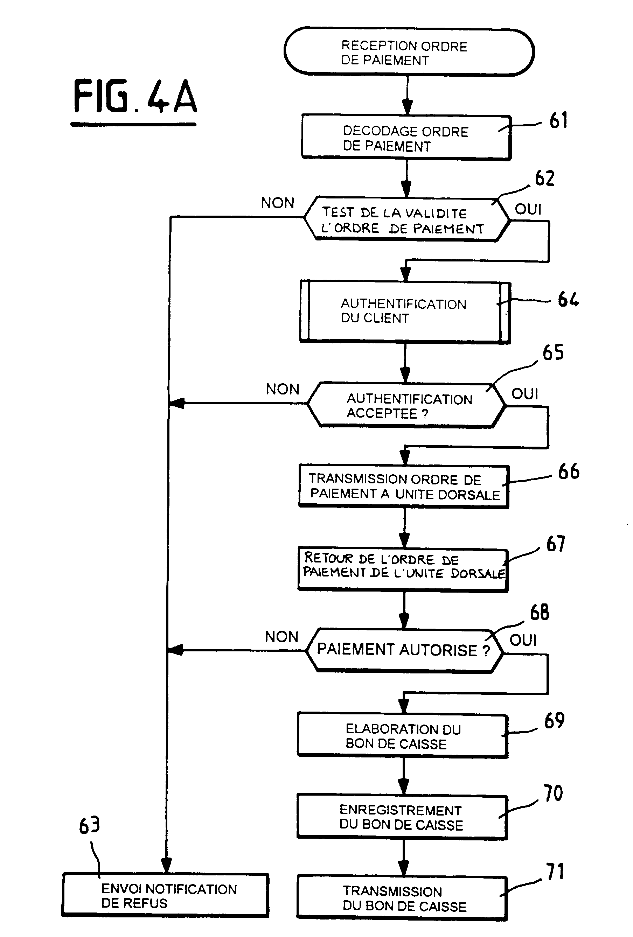

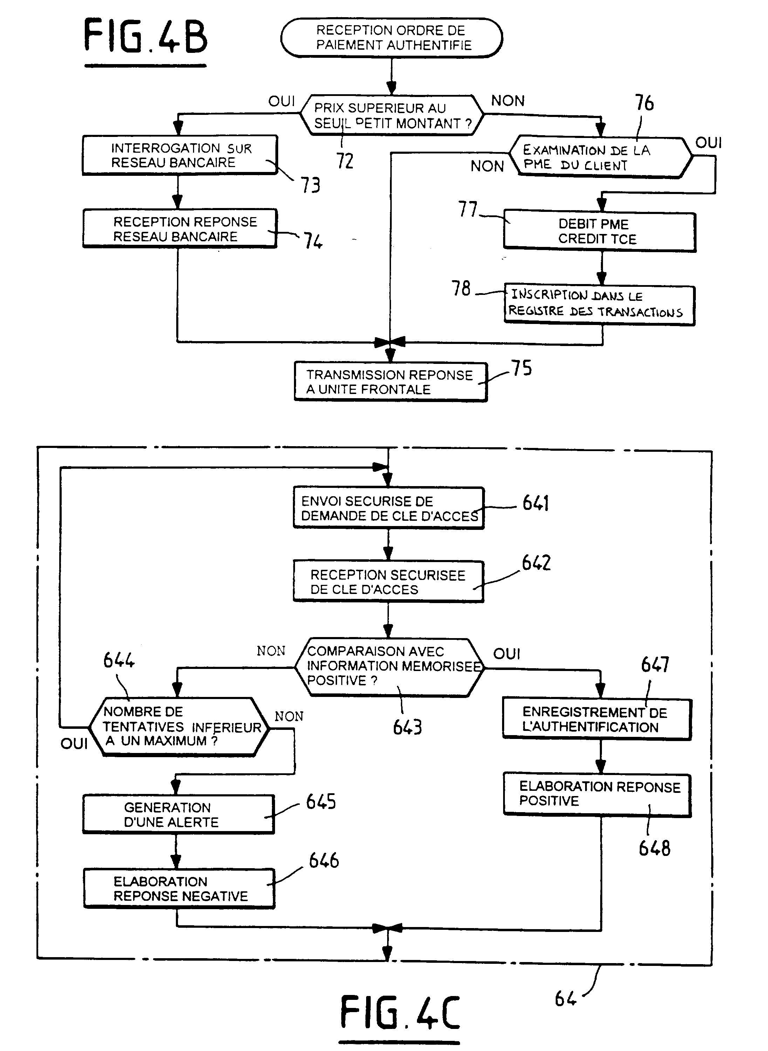

Les opérations d'authentification de client et d'autorisation de paiement seront décrites plus loin en détail en référence à la figure 4.

Lorsque les vérifications effectuées ne permettent pas d'autoriser le paiement, une notification de refus motivée est adressée au client par le serveur de paiement (indiquant, par exemple, compte insuffisamment approvisionné, dépassement d'un seuil autorisé pour le client,...)

Lorsque les vérifications effectuées permettent d'autoriser le paiement, les informations contenues dans le ticket de paiement sont complétées avec un numéro de série dans le registre des transactions 45, une estampille horaire, une durée de validité (typiquement quelques dizaines de secondes) et le sceau du serveur de paiement constituant une information de certification. L'ensemble de ces informations, éventuellement après signature numérique par l'utilisation de la partie de clef privée d'un système de chiffrement à clef privée/clef publique du serveur de paiement (ce qui garantit la validité et l'intégrité de l'autorisation de paiement), est encodé dans une chaîne d'octets qui constitue la chaîne opaque d'un bon de caisse ou URL de livraison :
URL http : <M> <descriptif du bon de caisse>
, où <M> est l'adresse "Internet" du marchand.

### (6) Demande de livraison

Le bon de caisse est transmis au serveur du marchand via le poste client. Ceci peut être effectué automatiquement par le logiciel implanté au poste client en utilisant la possibilité de re-routage des URL bien connue de l'homme du métier. Avant d'autoriser la livraison du bien, le serveur du marchand opère un décodage et une vérification du bon de caisse reçu. Cette vérification consiste à utiliser la clef privée éventuelle du serveur de paiement, à vérifier que la durée de validité n'est pas écoulée, et à rapprocher le contenu du bon de caisse avec celui de la demande de paiement.

### (7) Livraison du bien

Lorsque le bon de caisse est validé par le serveur du marchand, celui-ci peut effectuer la livraison directe sur le poste client, dans le cas de bien d'information, ou adresse au poste client un document permettant le retrait du bien et précisant notamment le lieu de livraison et le nom du récipiendaire.

On notera que, dans le cas d'un achat groupé (panier), il y a création par le serveur du marchand d'un objet avec affectation d'une identité unique. Cet objet est la liste des URL de chacun des biens du panier. Cest cet objet qui est indiqué dans l'URL de commande de bien et qui permettra d'enregistrer le détail des biens achetés dans le registre de transaction du serveur de paiement.

Les figures 4A à 4C montrent les opérations effectuées par le serveur de paiement 40 en réponse à la réception d'un ordre de paiement.

Dans l'unité frontale 41 (figure 4A), l'ordre de paiement est décodé (étape 61) et sa validité est examinée (test 62) notamment du point de vue de la durée de validité. Si le résultat de l'examen est négatif, une notification de refus est envoyée au poste client (étape 63).

Si le résultat de l'examen est positif, il est procédé ensuite à une authentification du client (étape 64), le détail de cette opération étant décrit plus loin en référence à la figure 4C. Si l'authentification est négative (test 65), une notification de refus est envoyée au client (étape 63). Si elle est positive, l'ordre de paiement (éventuellement limité à l'identité CId du client, à l'identité MId du marchand, et au prix) est transmis via la liaison 68 à l'unité dorsale 42 du serveur de paiement représenté sur la figure 2 (étape 66). La liaison 48 est une liaison sécurisée interdisant l'accès à l'unité dorsale à toute personne se connectant sur le réseau 10.

L'unité frontale 41 attend alors que l'unité dorsale décide d'autoriser ou non le paiement (étape 67). Si le paiement n'est pas autorisé, (test 68), une notification de refus est envoyée au poste client (étape 63). Si le paiement est autorisé, un bon de caisse est élaboré (étape 69), utilisant les informations enregistrées à l'étape 62. Le bon de caisse est enregistré dans une mémoire de l'unité frontale 41 (étape 70) et est adressé au serveur du marchand via le poste client (étape 71).

Au niveau de l'unité dorsale 42 (figure 4B) du serveur de paiement, à la réception d'un ordre de paiement authentifié, il est examiné si celui-ci doit être autorisé à partir du compte client **PME** via le réseau bancaire 50. A cet effet, le prix est comparé à un seuil minimum (test 72). Ce seuil est par exemple de quelques dizaines de francs.

Si le seuil est dépassé, une demande pour effectuer l'opération de paiement est lancée sur le réseau bancaire (étape 73) en utilisant l'identité bancaire correspondant à l'identité **CId** du client, telle qu'elle ressort de la consultation de la base de données 44. A la réception de la réponse positive ou négative (étape 74), celle-ci est transmise à l'unité frontale 41 (étape 75).

Si le seuil n'est pas dépassé, le paiement peut être effectué à partir du compte **PME** du client.

A cet effet, il est examiné si le compte est suffisamment approvisionné (test 76). Dans la négative, un refus d'autorisation de paiement, c'est-à-dire une réponse négative, est renvoyée à l'unité frontale (étape 75). Dans l'affirmative, le compte **PME** du client est débité du prix et le compte **TCE** de marchand correspondant à l'identité **MId** est crédité du même montant (étape 77), la transaction est inscrite dans le registre des transactions 45 (étape 78) et l'autorisation de paiement, c'est-à-dire une réponse positive est transmise à l'unité frontale 41 avec l'indication du numéro de série de l'inscription dans le registre de transactions (étape 75).

La procédure d'authentification dans le serveur de paiement (figure 4C), à l'étape 64 de la figure 4A, comprend l'envoi au poste client, de préférence dans une forme sécurisée (chiffrée), d'une demande de clé d'accès, ou mot de passe (étape 641). A la réception sécurisée de la clé d'accès (étape 642), une comparaison est effectuée avec une information correspondante contenue dans la base de données 44 (test 643).

Si la comparaison est négative, et qu'un nombre maximum de tentatives infructueuses n'a pas été atteint (test 644), on retourne à l'étape 641. Si ce nombre maximum est atteint, l'absence d'authentification est constatée, une alerte est produite (étape 645) et une réponse négative est envoyée au poste client (étape 646). L'alerte peut consister en une annulation du compte **PME** ou en une surveillance de celui-ci afin de détecter de nouvelles tentatives d'utilisation. Si le test à l'étape 643 est positif, l'authentification est enregistrée (étape 647) et une réponse positive est élaborée (étape 648).

Des techniques de chiffrement permettant la transmission sécurisée d'informations numériques sur réseau informatique, notamment pour la demande d'envoi de clé d'accès et l'envoi de celle-ci, sont bien connues.

La procédure d'authentification décrit ici permet d'effectuer une authentification préalable d'un client dans le cas où celle-ci est nécessaire avant l'établissement d'une demande de paiement par le serveur du marchand. Pour cette authentification, il suffit alors en effet de créer un ticket de paiement dans lequel le prix indiqué est nul, comme indiqué plus haut.

L'enregistrement des bons de caisse dans l'unité frontale permet aux clients et aux marchands de procéder à des contrôles et d'en obtenir éventuellement des copies. L'enregistrement des transactions dans l'unité dorsale permet d'en conserver une trace en cas, par exemple, de contestation entre un client et un marchand.

Les comptes clients **PME** gérés par le serveur de paiement ont en principe un montant de solde plafonné et, selon le mode de réalisation préféré de l'invention, ils ne sont pas rémunérés (le système de paiement se trouvant en dehors du monde bancaire). Un réapprovisionnement de son compte **PME** par un client peut être effectué à partir de son compte bancaire, par ordre donné à son établissement bancaire.

Les comptes marchands **TCE** gérés par le serveur de paiement sont associés à des comptes bancaires réels des marchands dans lesquels ils sont vidés par exemple quotidiennement.

Bien que l'on ait décrit ci-avant un mode de mise en oeuvre d'un procédé selon l'invention dans un environnement "Internet" et avec des logiciels WWW utilisant le protocole HTTP, l'homme de l'art comprendra aisément que le procédé peut être mis en oeuvre avec un réseau informatique autre qu'"Internet" ou encore avec des logiciels serveur marchand et client n'utilisant pas le protocole HTTP de WWW. En outre des procédés d'authentification sécurisés mettant en jeu des dispositifs matériels tels que lecteur de carte à puce ou moyen de reconnaissance d'empreinte vocale pourront être prévus à la place de clefs d'accès.

## Revendications

1. Procédé de paiement électronique pour des transactions liées à l'achat de biens offerts par des marchands à des clients via un réseau informatique ouvert (10) sur lequel sont connectés des postes serveurs de marchands (20) et des postes clients (30), caractérisé par les étapes de :
- élaboration par un poste serveur de marchand connecté au réseau d'une demande d'autorisation de transaction, ou ticket de paiement, concernant un achat envisagé entre le marchand et un client, et comportant des informations relatives au marchand, au client, à l'objet de l'achat et à son prix,
- transmission du ticket de paiement via le réseau informatique à un serveur de paiement (40) distinct des postes clients et serveurs de marchands,
- vérification automatique par le serveur de paiement si le paiement du prix est autorisé pour le client concerné, la vérification étant effectuée, selon le montant du prix à payer, soit par interrogation d'un compte client propre au client, tenu par le serveur de paiement, et destiné au paiement des petits montants, soit par interrogation sur un réseau bancaire indépendant du réseau informatique, pour les paiements de montants plus élevés,
- si la vérification est positive, élaboration par le serveur de paiement d'une autorisation de transaction ou bon de caisse comportant au moins une partie des informations du ticket de paiement,
- transmission du bon de caisse au serveur de marchand via le réseau informatique, afin d'autoriser la réalisation de l'achat, et
- lorsqu'un bon de caisse est transmis après vérification par interrogation d'un compte client tenu par le serveur de paiement, débit du montant de l'achat du compte client et crédit du montant de l'achat sur un compte marchand propre au marchand concerné et tenu par le serveur de paiement.

2. Procédé selon la revendication 1, caractérisé en ce que la vérification par le serveur de paiement comprend une phase préalable d'authentification du client.

3. Procédé selon la revendication 2, caractérisé en ce que l'authentification est réalisée par reconnaissance d'une clef d'accès transmise par le réseau informatique du poste client au serveur de paiement.

4. Procédé selon l'une quelconque des revendications 1 à 3, caractérisé en ce qu'il comprend l'élaboration par le serveur de paiement d'un bon de caisse comportant au moins une partie des informations du ticket de paiement et une information de certification.

5. Procédé selon l'une quelconque des revendications 1 à 4, caractérisé en ce qu'il comprend la mémorisation par le serveur de paiement des transactions autorisées, par stockage d'au moins une partie du contenu des bons de caisse.

6. Procédé selon l'une quelconque des revendications 1 à 5, caractérisé en ce que le ticket de paiement est transmis du serveur du marchand au serveur de paiement par l'intermédiaire du poste client.

7. Procédé selon l'une quelconque des revendications 1 à 6, caractérisé en ce que le bon de caisse est transmis du serveur de paiement au serveur du marchand par l'intermédiaire du poste client.

8. Système de paiement électronique pour effectuer des transactions liées à l'achat de biens offerts par des marchands à des clients via un réseau informatique ouvert (10), le système comportant des postes clients (30) et des postes serveurs de marchands (20) pouvant être connectés sur le réseau ouvert, système caractérisé en ce qu'il comporte en outre au moins un poste serveur de paiement (40) distinct des postes clients et serveurs de marchands et comprenant :
- une unité frontale (41) munie de moyens de connexion au réseau ouvert,
- une unité dorsale (42) munie de moyens de connexion à un réseau bancaire indépendant du réseau ouvert,
- des moyens de communication (48) entre les unités frontale et dorsale,
- des moyens (44) de mémorisation de comptes de clients, de comptes de marchands, et
- des moyens de traitement (43) pour, en réponse à la réception par l'unité frontale d'une demande d'autorisation de transaction ou ticket de paiement, concernant un achat envisagé entre un marchand et un client, vérifier si le paiement du prix est autorisé pour le client concerné par interrogation du compte du client ou du réseau bancaire en fonction du montant de l'achat envisagé et si la vérification est positive, élaborer une autorisation de transaction, ou bon de caisse afin de la transmettre sur le réseau ouvert via l'unité frontale, puis lorsque l'autorisation de transaction a été élaborée par interrogation du compte du client, débiter le montant de l'achat du compte du client et créditer le montant de l'achat sur le compte de marchand concerné.

9. Système de paiement selon la revendication 8, caractérisé en ce que le serveur de paiement comprend des moyens de mémorisation des transactions autorisées.

## Patentansprüche

1. Verfahren zum elektrischen Zahlen für Transaktionen in Verbindung mit dem Kauf von Waren, die Kunden von Händlern über ein offenes Datennetz angeboten werden, an das Händler-Serverstationen und Kundenstationen angeschlossen sind, gekennzeichnet durch folgende Schritte:
- von einer an das Netz angeschlossenen Händler-Serverstation wird ein Autorisierungsgesuch der Transaktion oder eine Zahlungskarte ausgefertigt, die einen beabsichtigten Kauf zwischen dem Händler und einem Kunden betrifft und Informationen über den Händler, den Kunden, den Verkaufsgegenstand und den Preis enthält,
- Übersenden der Zahlungskarte über das Datennetz an einen für die Kundenstationen und die Händler-Serverstationen bestimmten Zahlungs-Server,
- automatisches Prüfen durch den Zahlungs-Server, ob das Zahlen des Preises durch den betreffenden Kunden genehmigt ist, wozu das Prüfen abhängig von der Höhe des zu zahlenden Preises entweder durch Abfrage des von dem Zahlungs-Server zum Begleichen von Kleinbeträgen geführten Kundenkontos des Kunden oder - bei Zahlungen höherer Beträge - durch Anfrage über ein von dem Datennetz unabhängiges Bankennetz erfolgt,
- wenn die Prüfung positiv ausfällt, Erstellen einer Transaktionsautorisierung oder eine Kassenbons, der zumindest einen Teil der Informationen der Zahlungskarte enthält, durch den Zahlungs-Server;
- Übersenden des Kassenbons über das Datennetz zum Händler-Server, um die Ausführung des Kaufs zu genehmigen, und
- wenn ein Kassenbon nach der Prüfung durch Abfrage des bei dem Zahlungs-Server geführten Kundenkontos übersandt wird,
- Belasten des Kundenkontos mit dem Betrag des Einkaufs und Gutschreiben des Einkaufsbetrags dem Händlerkonto des betreffenden Händlers, welches von dem Zahlungs-Server geführt wird.

2. Verfahren nach Anspruch 1,
dadurch gekennzeichnet,
daß die Prüfung durch den Zahlungs-Server eine Vorlaufphase zur Autensitätsprüfung des Kunden aufweist.

3. Verfahren nach Anspruch 2,
dadurch gekennzeichnet,
daß die Autensitätsprüfung durch Wiedererkennen eines Zugriffsschlüssels erfolgt, der über das Datennetz von der Kundenstation an den Zahlungs-Server gesendet wird.

4. Verfahren nach einem der Ansprüche 1 bis 3,
gekennzeichnet durch
die Ausfertigung des Kassenbons durch den Zahlungs-Server mit zumindest einem Teil der Informationen der Zahlungskarte und einer Bestätigungsinformation.

5. Verfahren nach einem der Ansprüche 1 bis 4,
dadurch gekennzeichnet,
daß der Zahlungs-Server die genehmigten Transaktionen speichert, indem zumindest ein Teil des Inhalts der Kassenbons gespeichert wird.

6. Verfahren nach einem der Ansprüche 1 bis 5,
dadurch gekennzeichnet,
daß die Zahlungskarte von dem Händler-Server zu dem Zahlungs-Server über die Kundenstation übertragen wird.

7. Verfahren nach einem der Ansprüche 1 bis 6,
dadurch gekennzeichnet, daß der Kassenbon vom Zahlungs-Server dem Händler-Server über die Kundenstation übersendet wird.

8. Elektronisches Zahlungssystem zur Ausführung von Transaktionen in Verbindung mit dem Kauf von Waren, die Kunden von Händlern über ein offenes Datennetz angeboten werden, mit Kundenstationen und Händler-Server-Stationen, die über das offene Netz verbindbar sind,
dadurch gekennzeichnet,
daß das System außerdem mindestens eine Zahlungs-Serverstation aufweist, der für die Kundenstationen und die Händler-ServerStationen bestimmt ist und aufweist:
- eine Vordergrundeinheit mit Verbindungsmitteln für die Verbindung mit dem offenen Netz,
- eine Hintergrundeinheit mit Verbindungsmitteln für den Anschluß an ein von dem offenen Netz unabhängiges Bankennetz,
- Kommunikationsmittel zwischen der Vordergrund- und der Hintergrundeinheit,
- Speichermittel für Kundenkonten und Händlerkonten, und
- Verarbeitungsmittel, um ansprechend auf den Empfang eines Autorisierungsgesuchs für eine Transaktion oder einer Zahlungskarte, die einen beabsichtigten Kauf zwischen Händler und Kunden betrifft, durch die Vordergrundeinheit, zu prüfen, ob die Zahlung des Preises durch den betreffenden Kunden autorisiert ist, indem abhängig von dem Kaufbetrag das Kundenkonto oder das Bankennetz abgefragt wird, und, wenn die Prüfung positiv ausfällt, eine Transaktionsautorisierung oder einen Kassenbon erstellt wird, um diesen über die Vordergrundeinheit auf das offene Netz zu übertragen, woraufhin, wenn die Transaktionsautorisierung durch Abfrage des Kundenkontos erstellt ist, das Kundenkonto mit dem Kaufbetrag belastet und dem Konto des betreffenden Händlers der Kaufbetrag gutgeschrieben wird .

9. Zahlungssystem nach Anspruch 8,
dadurch gekennzeichnet,
daß der Zahlungs-Server Speichermittel für die genehmigten Transaktionen aufweist.

## Claims

1. A method for effecting electronic payments for transactions relating to the purchase of goods offered by suppliers to customers via a public computer network (10), to which are connected supplier servers (20) and customer stations (30), the method being characterised in that it includes the steps of:
- development, by a supplier server connected to the network, of a transaction authorisation request, or payment ticket, concerning a purchase envisaged between the supplier and a customer, and comprising information relating to the supplier, the customer, the purchase object and the price,
- transmission of the payment ticket via the computer network to a payment server (40) which is distinct from the customer station and supplier server,
- automatic verification by the payment server of whether the payment of the price is authorised for the concerned customer, the verification being effected, according to the amount of the price to be paid, either by interrogation of a customer account that belongs to the customer, is kept by the payment server and is intended for the payment of small sums, or by interrogation on a banking network, independent of the computer network, for the payments of higher sums,
- if the verification is positive, development by the payment server of a transaction authorisation or voucher including at least a part of the payment ticket information,
- transmission of the voucher to the supplier server via the computer network, so as to authorise the conclusion of the purchase, and
- when a voucher is transmitted after verification by interrogation of a customer account kept by the payment server, debiting the customer account of the amount of the purchase, and crediting the amount of the purchase to the supplier account relative to the concerned supplier and kept by the payment server,

2. A method according to claim 1, characterised in that the verification by the payment server comprises a preliminary customer authentication phase.

3. A method according to daim 2, characterised in that the authentication is achieved by recognition of an access key transmitted by the computer network from the customer station to the payment server.

4. A method according to any one of claims 1 to 3, characterised in that it comprises the development by the payment server of a voucher comprising at least a part of the information of the payment ticket and certification information.

5. A method according to any one of claims 1 to 4, characterised in that it comprises memorisation by the payment server of the authorised transactions, by storing at least a part of the contents of the voucher.

6. A method according to any one of claims 1 to 5, characterised in that the payment ticket is transmitted from the payment server to the supplier server by the intermediary of the customer station.

7. A method according to any one of claims 1 to 6, characterised in that the voucher is transmitted from the payment server to the supplier server by the intermediary of the customer station.

8. Electronic payment system for effecting transactions relating to the purchase of goods offered by suppliers to customers via a public computer network (10), the system comprising customer stations (30) and supplier servers (20) that may be connected to the network,
characterised in that the system further comprises at least one payment server (40) distinct from the customer stations and the supplier servers and comprising:
- a front unit (41) having means for connecting to the public network,
- a rear unit (42) having means for connecting to a banking network independent of the public network,
- means (48) for communicating between the front and rear units,
- means (44) for storing customer accounts and supplier accounts, and
- processing means (43) for verifying, in response to the reception by the front unit of a transaction authorisation request or a payment ticket, concerning a purchase envisaged between the supplier and a customer, and as a function of the amount of the envisaged purchase, if the payment of the price is authorised for the customer concerned by interrogating the customer account or the banking network, and, if the verification is positive, developing a transaction authorisation, or voucher in order to transmit the same to the public network via the front unit and, when the transaction authorization has been developed further to interrogating the customer account, debiting the customer account of the amount of the purchase and crediting the account of the concerned supplier of the amount of the purchase.

9. Payment system according to claim 8, characterised in that the payment server comprises means for memorising authorised transactions.
